# EUROPEAN PATENT SPECIFICATION

(11) **EP 2 778 483 B1**
(45) Date of publication and mention of the grant of the patent: **10.01.2018**
(21) Application number: 12806677.6
(22) Date of filing: 09.11.2012
(51) Int. Cl.: F16J 15/34

(54) **INTERNAL COOLING SYSTEM FOR MECHANICAL SEALS AND USE THEREOF**
SISTEMA DE REFRIGERAÇÃO INTERNA PARA EMPANQUES MECÂNICOS E SEU USO
SYSTÈME DE RÉFRIGÉRATION INTERNE POUR GARNITURES MÉCANIQUES ET SON UTILISATION

(30) Priority: 11.11.2011 PT 2011106000
(43) Date of publication of application: 17.09.2014
(73) Proprietor: Eiquipetrol - Indústria e Comércio de Equipamentos Mecânicos Lda., 4470-777 Vila Nova da Telha - Maia (PT)
(72) Inventor: DA COSTA NEVES, João, 4470-777 Vila Nova da Telha - Maia (PT)
(74) Representative: Ferreira, Maria Silvina
(86) International application number: PCT/IB2012/056311
(87) International publication number: WO 2013/068992

(56) References cited:
- EP-A2- 0 447 898
- DE-U1- 20 217 585
- US-A- 4 123 069
- US-A- 4 872 689

## Description

### Technical Field of the Invention

The present invention relates to a internal cooling system for a mechanical seal with the main objective to provide thereto conditions of greater reliability and longer service life periods, in particular, when applied to rotating pumping devices operating at temperatures lower than 420 °C, preferably between 200 °C and 420 °C, and pressures of less than 3,3 MPa, preferably between 1,2 MPa and 3,3 MPa, depending on the diameter of the mechanical seal. See e.g. DE 202 17 585 U.

### Background of the Invention

The sealing systems for rotating equipment with main incidence in centrifugal pumps which move chemical or petrochemicals products, such as for example pumping of crude oil and derivatives thereof at high temperatures and pressure, have been over the years the subject of various studies, in order to improve its efficiency, so that the pumping equipment where they are applied are more productive to avoid downtimes and maintenance services and serious environmental problems originated by the leaks caused as well as the ineffectiveness of non-productive equipment, which have high costs.

The problem of high pressures, when the equipment operates at temperatures lower than 250 °C, has been solved with hydraulic compensation techniques and appropriate generic dimensions and also with compatible materials.

The technical problem with highest difficulty of resolution is when the equipment is operating at pressures exceeding 1,6 MPa and temperatures above 250 °C, with viscous products of easy hardening and coking, if for any reason, there is a stop and respective cooling of the product.

Some manufacturers have developed a sealing system - a mechanical seal, called bellows - that has behaved with reasonable levels of efficiency at temperatures above 250 °C, but not enough to prevent ruptures of these bellows with very short intervals when the equipment operates at pressures exceeding 1,6 MPa. This rupture will inevitably cause a spill of the product to be pumped, which in addition to the economic loss could represent a serious environmental problem.

A mechanical seal is essentially made of a static ring with faceted face, which is pressed by another ring equally with faceted face, rotating, having as a pressure aid one or several springs, which urges the faces, both stationary and rotating, never to deviate from one another, which we call the main seal. This seal must be co-assisted by the designated secondary seals, which may be made of polymeric materials, preferable dynamic or static elastomer, without which the sealing is not achieved. The limit of temperature resistance of these secondary seals, depending on their intrinsic characteristics, extends up to maximum 250 °C, in non-continuous service, being the limiting factor of the mechanical seal.

In its axial movement, which is a necessary movement for the faces to seal, the rotating or stationary ring will have to have in the axial sliding area, also referred to as compensation diameter, an O-ring seal, which can be made of polymeric material, preferably an elastomer, that, as mentioned above, has limits of temperature resistance. The pumps where these rings are integrated work at temperatures that may reach between 370 °C and 400 °C, not allowing the use of an elastomer type material.

The bellows eliminate the use of polymeric materials as secondary seal and in its place graphite rings are used that support higher temperatures, but they can only be used as static joints and they also replace the spring or springs applied. However, its frail construction cannot take pressures above 1,5 MPa, which very quickly causes fatigue and consequently rupture of the material. This type of mechanical seals is called bellows seals.

Another drawback is that the bellows are in contact with the product to be pumped, and when it cools, it hardens and encrusts in the interstices of the bellows, making it a rigid body, inoperative in its axial movement by a phenomenon of swaying, which gives rise to their "rupture" and consequent escape of the product to the exterior. A rotating rigid body in contact with another stationary rigid body, by friction, develops an elevation of temperature between the faces in contact, creating a phenomenon of dilation that could lead to its adhesion, commonly known as seizing, and its breakdown.

Likewise, the increase of pressure above 1,5 MPa causes the rapid rupture of the bellows and respective leakage of the product - bellows are made of steel with very thin blades that do not support pressures above 1,5 MPa. Its design is specified for use with pressures up to a maximum of 1,5 MPa under conditions of very low aggressiveness and, even then with premature fatigue of the material.

Thus, the present invention is concerned to the development of a mechanical seal with an internal cooling system, whose design and characteristics promote substantial improvements in the functioning of pumping equipment such as:
- Elimination of the bellows system;
- Application of metallic alloy springs that are totally insulated from the product to be pumped and consequent guarantee of its operability;
- Use of secondary seals made of polymeric materials, preferably elastomer, that should be selected taking into account parameters such as temperature reached by the pump and the product to be pumped;
- Possibility to use graphite seals that should be applied in static locations and the areas most susceptible to temperature, such as for example the rotating part of the main mechanical seal - product side-rotating-sealing side;
- Allow the use of elastomeric gasket in the sealing - shaft/sleeve.

General characteristics mentioned above allow the mechanical seal to operate at pressures, which may go up to 3,3 MPa and temperatures up to 420 °C.

### Summary of the Invention

It is an object of the present invention to describe an internal cooling system for mechanical seals comprising:
- an internal circuit in the body of the mechanical seal that consists of a connection effected in the larger diameter of the seal with a diameter of between 2,5 and 6,0 mm that will connect to a chamber previously implemented inside the body, involving in its periphery the area where the secondary seal will be applied and where a cooling fluid circulates;
- at least one entry point of the cooling fluid;
- at least one exit point of the cooling fluid;
- at least two protective scraper rings.

In a preferred embodiment, the internal cooling system for mechanical seals has a cooling fluid induced in the mechanical seal at a stable pressure of 0,7 MPa.

In still another preferred embodiment, the internal cooling system for mechanical seals has entry and exit points of the cooling fluid connected to the respective supply network.

In a preferred embodiment, the internal cooling system for mechanical seals has entry and exit points of the cooling fluid with the same diameter.

In yet another preferred embodiment, the internal cooling system for mechanical seals has entry and exit points of the cooling fluid with diameters different to each other and comprised between 2,0 and 4,0 mm.

In a preferred embodiment, the internal cooling system for mechanical seals has a separator between the entry and exit points of the cooling fluid.

In yet another preferred embodiment, the internal cooling system for mechanical seals has a derivation with a diameter between 2,5 and 6,0 mm for the zone of stationary ring and lid seal.

In a preferred embodiment, the internal cooling system for mechanical seals has protective scraper rings applied to the stationary part next to the product to be pumped and the sleeve/shaft joint.

In yet another preferred embodiment, the internal cooling system for mechanical seals has a sprinkle type system, where the cooling fluid is projected by pulverization to the area of the secondary seal from the shaft the sleeve.

In a preferred embodiment, the internal cooling system for mechanical seals can be applied to simple mechanical seals not compensated, simple compensated, double back-to-back and double in tandem.

It is also an object of the present invention to present the use of the internal cooling system for mechanical seals on centrifugal pumps, which move chemical or petrochemical products.

### General Description of the Invention

The design and development of an internal cooling system for a mechanical seal aims mainly to promote thereto, conditions for greater reliability and longer service life periods, especially when applied to rotary pump equipment operating at temperatures lower than 420 °C, preferably between 200 °C and 420 °C, and at pressures of less than 3,3 MPa, preferably between 1,2 MPa and 3,3 MPa, depending on the size of the mechanical seal.

When applied to this type of equipment and under the conditions described above, bellows seals are the only ones capable to solve the problem of temperature, but not pressures, which usually are around 1,8 to 2,0 MPa, which leads to a substantial reduction in their lifetime in service and consequent sealing faults, which can be severe.

The internal cooling system will create conditions for application of seals with more robust features when compared to bellows seals so that they can operate at pressures up to 3,3 MPa, depending on the size of the mechanical seal and temperatures lower than 420 °C, preferably between 200 °C and 420 °C.

In order to achieve this objective it will be necessary that certain critical areas of temperature such as areas where secondary seals are applied, the temperature is reduced to levels at which it is possible to use the usual secondary seals, namely polymeric materials, preferably elastomer.

A practical and non-limiting example to the scope of this invention is the application of this mechanical seal in a centrifugal pump operating at 250 °C forcing that on identified areas there is a need to reduce the temperature to values lower than 180 °C.

To reduce the operating of the mechanical seal a system must be elaborated comprising the implementation of an internal circuit in the body of the mechanical seal, through which a cooling fluid will circulate, preferably an inert gas or even more preferably compressed air or liquid nitrogen, at a stable pressure of 0,7 MPa, which will cool the critical areas, thus preventing that the temperature exceeds 180 °C in these points. This system can also be applied to an already existing metallic seal as long as the service conditions are known.

The internal circuit consists of, through a connection implemented in the larger diameter of the seal body, with continuity of implementing a hole of between 2,5 and 6,0 mm diameter, which will connect to a chamber previously implemented inside the body, and which involves in its periphery the area where the secondary seal will be applied, said seal being protected in relation to the temperature which operates in the seal box. This is, in fact, the most critical area where it will be necessary to control the temperature.

The cooling fluid that passes through this circuit and that is fully insulated from the product to be pumped has at least one exit to the exterior, which is located very near the entry which can also be more than one. These points of entry and exit of the cooling system are connected to the mains supply of the cooling fluid. Both entry and exit points have the same dimension. In some preferred cases, there can be applied exit diameter between 2,0 to 4,0 mm, or preferably, 2,0 mm to increase the speed of extractions of the cooling fluid.

Given that the entry and exit points of the cooling fluid have some proximity, a separator can also be applied in the chamber, made of machined plate, thus avoiding the transfer of heat between the exiting and the entering fluid.

The temperatures developed inside the pump by thermal conduction are transmitted through the shaft and the sleeve of the seal, which are directly in contact with the product and that at exit of the sleeve located on the back of the seal, is also reflected at this point, where it is also necessary to apply secondary seals.

From the primary circuit of the incoming cooling fluid, there is a derivation with a hole having a diameter between 2,5 and 6,0 mm and a chamber whose cooling fluid that circulates therethrough, cools all this area - stationary ring seal and lid seal.

It was further anticipated the application of at least two protective scraper rings to avoid the passage of the product into the critical seals - the stationary side of the product and the sleeve joint/shaft on the same side.

In the interior periphery of the last closing lid, a sprinkle type system was created, where the cooling fluid is projected by pulverization to area of the secondary seal from the shaft to the sleeve. As the lid is static and the shaft/sleeve are rotating, the cooling is constant in its periphery.

This system can be applied to any type of mechanical seal known, simple not compensated, simple compensated, double back-to-back and double in tandem. Its application is however dependent to the existence of physical spaces for their insertion.

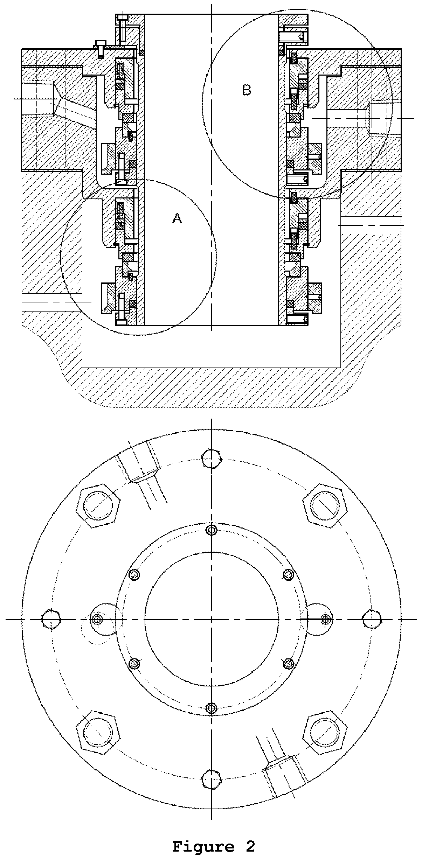

In double seals, such as for example shown in Figure 2, seal A is designated as the main seal because it is the one that is directly in contact with the product to be pumped, being seal B designated as a gland packing or leakage alarm seal. On the seal A, the joint (2) cannot be in graphite, since the same will have to seal and at the same time facilitate the axial displacement, essential of the stationary ring (1). This joint seal - the dynamic joint - must be very compressed, which inhibits the displacement of the ring - the critical point - only with the use of elastomeric joint the sealing/axial movement can be combined.

As the existing elastomer does not support temperatures above 180 °C, there was a need to innovate or develop a system where its use was possible.

In a development phase of testing a preferred embodiment was elaborated wherein the mechanical seal was submitted to temperatures of 360 °C but these critical areas did not exceeded 95 °C.

### Brief Description of the Drawings

For an easier understanding of the invention attached are the Figures, which represent preferred embodiments of the invention, which, however, are not intended to limit the object of this invention.

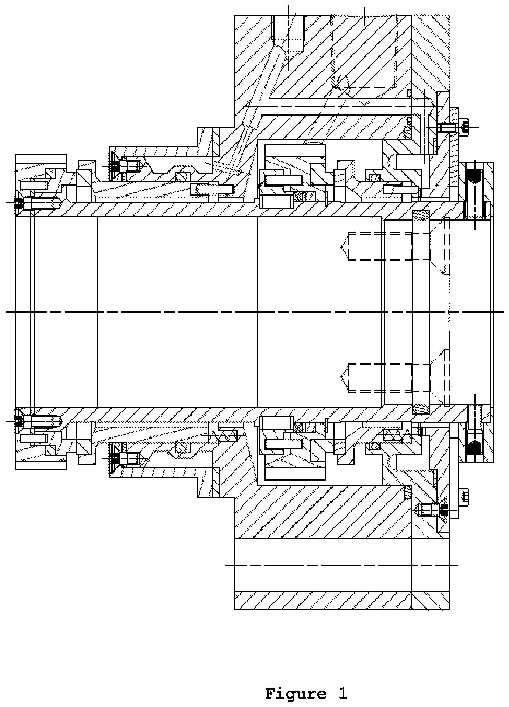

Figure 1: Cross sectional view of a mechanical seal with cooling system.
Figure 2: View of a double cartridge seal in tandem wherein the existence of multiple stationary springs can be seen, insulated from the product to be pumped, and with centrifugal rotating ring.

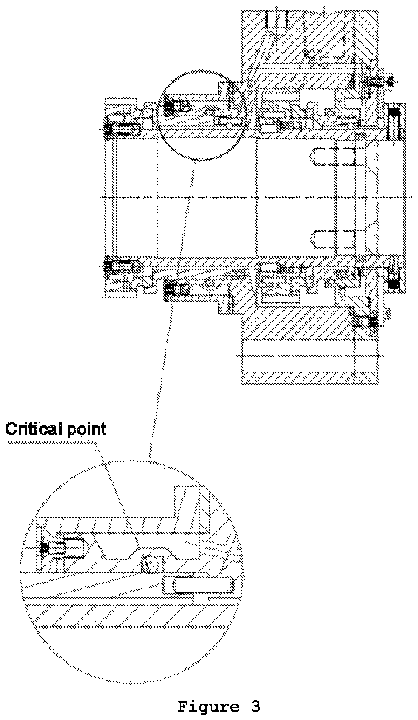

Figure 3: View of a mechanical seal with cooling system with details of the critical areas wherein the cooling system will represent an asset.

## Claims

1. Internal cooling system for mechanical seals in pumping equipment comprising:
- an internal circuit in the body of the mechanical seal that consists of a connection effected in the larger diameter of the seal with a diameter of between 2,5 and 6,0 mm that will connect to a chamber previously implemented inside the body, involving in its periphery the area where a secondary seal between the shaft and the seal will be applied and where a cooling fluid is foreseen to circulate fully insulated from the product to be pumped;
- at least one entry point of the cooling fluid and at least one exit point of the cooling fluid, wherein both entry and exit points are connected to the mains supply of the cooling fluid and are separated from each other by a machined plate applied to the chamber;
- at least two protective scraper rings applied to the stationary part next to the product to be pumped and the sleeve/shaft secondary seal;
- multiple stationary springs insulated from the product to be pumped, and with centrifugal rotating ring; **characterised in that** said internal cooling system further comprises a sprinkle type system, where the cooling fluid is projected by pulverization to the area of secondary seal between the shaft and the sleeve.

2. Internal cooling system for mechanical seals according to the previous claim, wherein the cooling fluid is induced into the mechanical seal at a stable pressure of 0.7 MPa.

3. Internal cooling system for mechanical seals according to the previous claims, wherein the entry and exit points of the cooling fluid are connected to the respective supply network.

4. Internal cooling system for mechanical seals according to the previous claims, wherein the entry and exit points of the cooling fluid have the same diameter.

5. Internal cooling system for mechanical seals according to the previous claims, wherein the entry and exit points of the cooling fluid have different diameters comprised between 2.0 and 4.0 mm.

6. Internal cooling system for mechanical seals according to the previous claims, wherein the system has a derivation with a diameter between 2.5 and 6.0 mm for the zone of stationary ring seal and lid seal.

7. Internal cooling system for mechanical seals according to the previous claims, wherein the protective scraper rings are applied to the stationary part next to the product to be pumped and the sleeve/shaft joint.

8. Internal cooling system for mechanical seals according to the previous claims, which is applied to simple mechanical seals not compensated, simple compensated, double back-to-back and double in tandem.

9. Use of the internal cooling system for mechanical seals according to claims 1 to 8, applied to centrifugal pumps, intended to move chemical or petrochemical products.

## Patentansprüche

1. Internes Kühlsystem für Gleitringdichtungen in Pumpeneinrichtungen umfasst:
- einem internen Kreislauf im Gehäuse der Gleitringdichtung, welcher aus einem Anschluss am größeren Durchmesser der Dichtung mit einem Durchmesser zwischen 2,5 und 6,0 mm besteht, der mit einer, vorher im Gehäuse implementierten, Kammer verbunden ist in deren Umfang befindet sich der Bereich, in dem eine Sekundärdichtung zwischen der Welle und der Dichtung angebracht wird und wo eine Kühlflüssigkeit vollkommen getrennt von dem zu pumpenden Produkt zirkuliert;
- zumindest eine Eintrittsstelle der Kühlflüssigkeit und zumindest eine Austrittsstelle der Kühlflüssigkeit, wobei sowohl die Eintritts- als auch die Austrittsstelle mit dem Versorgungsnetz der Kühlflüssigkeit verbunden sind und durch eine bearbeitete, in die Kammer eingebrachte, Platte voneinander getrennt werden;
- zumindest zwei schützende, an das stationäre Teil in der Nähe des zu pumpenden Produkts und die Hülse/Welle der Sekundärdichtung angebrachte Abstreifringe;
- mehrfache stationäre, von dem zu pumpenden Produkt isolierte, Federn und mit zentrifugalem Drehring; **gekennzeichnet dadurch, dass** das besagte interne Kühlsystem weiterhin aus einem Sprühsystem umfasst, in dem die Kühlflüssigkeit auf den Bereich zwischen Welle und Hülse der Sekundärdichtung gesprüht wird.

2. Internes Kühlsystem für Gleitringdichtungen gemäß dem vorherigen Anspruch, wobei die Kühlflüssigkeit in die Gleitringdichtung mit einem stabilen Druck von 0,7 MPa eingeleitet wird.

3. Internes Kühlsystem für Gleitringdichtungen gemäß den vorherigen Ansprüchen, wobei die Eintritts- und Austrittsstellen der Kühlflüssigkeit an das entsprechende Versorgungsnetz angeschlossen werden.

4. Internes Kühlsystem für Gleitringdichtungen gemäß den vorherigen Ansprüchen, wobei die Eintritts- und Austrittsstellen der Kühlflüssigkeit den gleichen Durchmesser haben.

5. Internes Kühlsystem für Gleitringdichtungen gemäß den vorherigen Ansprüchen, wobei die Eintritts- und Austrittsstellen der Kühlflüssigkeit unterschiedliche Durchmesser mit Abmessungen zwischen 2,0 und 4,0 mm haben.

6. Internes Kühlsystem für Gleitringdichtungen gemäß den vorherigen Ansprüchen, wobei das System eine Ableitung mit einem Durchmesser zwischen 2,5 und 6,0 mm für die Zone des stationären Rings und der Deckelabdichtung hat.

7. Internes Kühlsystem für Gleitringdichtungen gemäß den vorherigen Ansprüchen, wobei die schützenden Abstreifringe an das stationäre Teil in der Nähe des zu pumpenden Produkts und die Hülse/Wellen-Verbindung angebracht werden.

8. Internes Kühlsystem für Gleitringdichtungen gemäß den vorherigen Ansprüchen, welches an einfachen, nicht kompensierten und einfach kompensierten Gleitringdichtungen sowie an doppelwirkenden und doppelten Gleitringdichtungen in Tandem-Ausführung angewandt wird.

9. Verwendung des internen Kühlsystems für Gleitringdichtungen gemäß den Ansprüchen 1 bis 8 zur Verwendung an Kreiselpumpen für die Förderung von chemischen oder petrochemischen Produkten.

## Revendications

1. Système de refroidissement interne pour les joints mécaniques en équipement de pompage, comprenant:
- un circuit interne dans le corps du joint mécanique qui consiste en une connexion effectuée dans le plus grand diamètre du joint ayant un diamètre compris entre 2,5 mm et 6,0 mm, qui se connectera à une chambre antérieurement mise en place à l'intérieur du corps, impliquant dans sa périphérie la surface où un joint secondaire entre l'arbre et le joint sera appliqué et
où il est prévu que le fluide de refroidissement circule entièrement isolé du produit à être pompé;
- au moins un point d'entrée du fluide de refroidissement et au moins un point de sortie du fluide de refroidissement, où les deux points d'entrée et de sortie sont connectés à l'alimentation secteur du fluide de refroidissement et sont séparés l'un de l'autre par une plaque usinée appliquée à la chambre;
- au moins deux anneaux racleurs de protection appliqués à la partie stationnaire, près du produit à être pompé et du joint secondaire d'arbre/de la manche;
- multiples ressorts stationnaires isolés du produit à être pompé et avec un anneau rotatif centrifuge; **caractérisé par le fait que** ledit système de refroidissement interne comprend également un système de type gicleur, où le fluide de refroidissement est projeté par pulvérisation vers la superficie du joint secondaire entre l'arbre et la manche.

2. Système de refroidissement interne pour les joints mécaniques selon la revendication antérieure, dans lequel le fluide de refroidissement est induit dans un joint mécanique à une pression stable de 0,7 MPa.

3. Système de refroidissement interne pour les joints mécaniques selon les revendications antérieures, dans lequel les points d'entrée et de sortie du fluide de refroidissement sont connectés au respectif réseau d'approvisionnement.

4. Système de refroidissement interne pour les joints mécaniques selon les revendications antérieures, dans lequel les points d'entrée et de sortie du fluide de refroidissement ont le même diamètre.

5. Système de refroidissement interne pour les joints mécaniques selon les revendications antérieures, dans lequel les points d'entrée et de sortie du fluide de refroidissement ont des diamètres différents compris entre 2,0 mm et 4,0 mm.

6. Système de refroidissement interne pour les joints mécaniques selon les revendications antérieures, dans lequel le système a une dérivation avec un diamètre entre 2,5 mm et 6,0 mm pour la zone du joint en anneau stationnaire et du joint du couvercle.

7. Système de refroidissement interne pour les joints mécaniques selon les revendications antérieures, dans lequel les anneaux racleurs de protection sont appliqués à la partie stationnaire près du produit à être pompé et du joint d'arbre/manche.

8. Système de refroidissement interne pour le joints mécaniques selon les revendications antérieures, qui est appliqué aux simples joints mécaniques non compensés, simples compensés, double dos-à-dos et double en tandem.

9. Usage du système de refroidissement interne pour les joints mécaniques selon les revendications de 1 à 8, appliqué aux pompes centrifuges, destinées à déplacer des produits chimiques ou pétrochimiques.
